# EUROPEAN PATENT SPECIFICATION

(11) **EP 2 919 447 B1**
(45) Date of publication and mention of the grant of the patent: **28.04.2021**
(21) Application number: 15158849.8
(22) Date of filing: 12.03.2015
(51) Int. Cl.: H04M 3/22, H04M 3/42

(54) **A METHOD FOR BUILDING PSEUDO-FABRICATED RECORDS FOR TELECOMMUNICATION PLATFORM**
VERFAHREN ZUR HERSTELLUNG PSEUDO-HERGESTELLTER DATENSÄTZE FÜR TELEKOMMUNIKATIONSPLATTFORM
PROCÉDÉ DE CONSTRUCTION D'ENREGISTREMENTS PSEUDO-FABRIQUÉS POUR PLATE-FORME DE TÉLÉCOMMUNICATION

(30) Priority: 13.03.2014 IL 23152814
(43) Date of publication of application: 16.09.2015
(73) Proprietor: Deutsche Telekom AG, 53113 Bonn (DE)
(72) Inventor: Chizi, Barak, Ashkelon (IL); Rokach, Lior, Omer (IL); Shapira, Bracha, Beer Sheva (IL); Elovici, Yuval, 79864 Arugot (IL)
(74) Representative: Perani & Partners S.p.A.

(56) References cited:
- US-A1- 2010 027 771
- US-A1- 2013 346 447
- US-B1- 8 655 314

## Description

### Field of the Invention

The invention is in the field of telecommunication platform. More specifically the invention relates to a method for building pseudo-fabricated records for telecommunication platform.

### Background of the Invention

In the modern world, the use of communication networks is almost inevitable, weather if it is cellular communication or computers communication or any other communication platform. The communication companies have therefore, records about every user. From these records a lot of information can be derived; however, using real data of any communication network has always caused a serious privacy problem. Generally speaking, the main problem is connected by the need for protecting the users from unsupervised monitoring. Nevertheless, the need of knowing the nature of data can yield significant value for many applications (marketing, sales, and customer service).

US 8,655,314 describes telecom-fraud detection using device location information. D1 receives CDR (Call Data Records) and detects frauds.

It is therefore a purpose of the present invention to provide a platform for obtaining the nature of data, building a descriptive model and producing pseudo fabricated data upon it.

Further purposes and advantages of this invention will appear as the description proceeds.

### Summary of the Invention

The present invention is directed to a system for predicting activities and movements of people in the near future using true communication records of a telecommunication platform which contain all details of active operations that are carried out by users, without affecting user privacy, said system comprising the features of claim 1.

In one aspect, said pseudo-fabricated records are used to predict activities and movements of people in the near future for transition probabilities between given locations.

In one aspect, near future refers to hours or days.

The present invention is also directed to a method for predicting activities and movements of people in the near future using true communication records of a telecommunication platform which contain all details of active operations that are carried out by users, without affecting user privacy, comprising the steps of claim 4.

In one aspect, the step of predicting general cluster behavior comprises the steps of:
a. observing the spatiotemporal data for each user being a device holder;
b. clustering of the users to obtain a dendogram (a tree-structured graph used to visualize the result of a hierarchical clustering calculation. The result of a clustering is presented either as the distance or the similarity between the clustered rows or columns depending on the selected distance measure);
c. selecting a dendogram threshold; and
d. learning the stochastic model for each cluster.

Every time data from a specific cluster is used and a pseudo-fabricated record is created, it is different from other pseudo-fabricated record created from the same cluster.

All the above and other characteristics and advantages of the invention will be further understood through the following illustrative and non-limitative description of embodiments thereof, with reference to the appended drawings. In the drawings the same numerals are sometimes used to indicate the same elements in different drawings.

### Brief Description of the Drawings

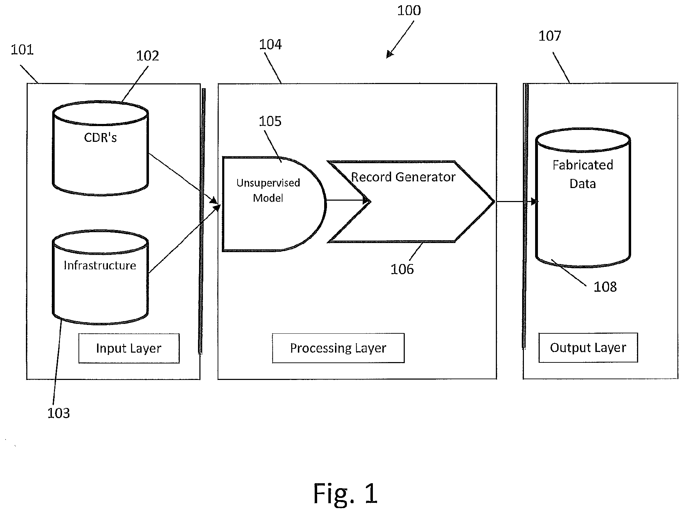

- Fig. 1 schematically shows a block diagram of the system of the invention.

### Detailed Description of Embodiments of the Invention

The present invention relates to a method and system which builds pseudo-fabricated records based on true communication record, so that the privacy of users is not affected, yet the clusters of the true records and pseudo-fabricated records are the same. The records are used for constructing a model which is able to predict activities and movements of people in the near future (for example: the following hours or the following day), and utilizing the information for different applications such as marketing, sales, and customer service. For example: a bus company could use the model of the present invention to predict how many people would gather in the bus station and in what hour, and so the bus company can reinforce the bus system and increase the number of buses in accordance with the number of people which are predicted to wait in bus station, in the following hours.

Another example for the use of the model of the present invention can be in a store. The business owner can use the model of the present invention to predict rush hours with a mass of clients and so increasing the number of employees and cashiers.

Generally, communication companies hold Call Detail Records (CDR), which contains all details of the active operations that are carried out by the subscribers of the company, such as receiving and issuing calls, receiving and issuing messages etc. the record of the calls usually comprises details such as: the number of subscriber, hour of operation, the number of the "other side" subscriber which received/issued the call/SMS, the duration of the call, incoming or outgoing call and from what base station the call came from.

The purpose of the CDR is for charging the subscribers for the communication service and another purpose is for statistical data aggregation in order to learn and improve the services and benefits of the companies.

However, using these CDR records harms the privacy of the subscribers, which is protected by law. An example of the harm of privacy except for the direct information that is given in the CDR is the physical location of the subscriber. Since there is a record of all the base station of the subscriber it is possible to derive information about its location. If the base station is the same during a certain period of time it means that the subscriber was at this place during all that period, if the base stations changes it means the subscriber is moving from one place to another and it is possible to track his location and his trajectory.

The law doesn't allow passing this information to unauthorized entities. Moreover, in some countries it is not allowed to hold such records for more than a few hours.

The present invention overcomes the restrictions on privacy by building pseudo-fabricated records for communication platform which are called hereinafter XDR.

Fig. 1 schematically shows a diagram of the system of the invention. System 100 comprises three main layers. The first is an input layer 101. The input layer 101 consists two main sources. The first is a module which contains the original CDR data set 102, which includes all communication records. This data set is considered to be confidential since it enables to track or to monitor the device holders and their location. The second source is the infrastructure data source 103, which translate the signaling data into geographical means. This can enable to point out the device location from its signaling data. The signaling data is relevant to any wireless network and not only to cellular networks, for example: WiFi, or computers communication (by using the IP of each computer) etc.

The second layer is the processing layer 104. The processing layer uses the data collected in the first layer. This layer is combined with two main modules. The first module is an unsupervised learning mechanism 105. The purpose of this mechanism is to yield a generic pattern of a similar group of people that can predict the behavioral of a device holder which belong to this group. The behavior of each device holder is clustered and so the personal features of the person "behind" the device are camouflaged. This phase can be described by the following steps:
a. For each device holder partially observe his spatiotemporal data (when in the time dimension - it is considered on the weekday, hour (not including minutes), time to travel between positions).
b. Pairwise bottom up clustering of the users to obtain a dendrogram.
c. Select the dendrogram threshold (considering privacy/number of devices required); and
d. Learn a stochastic model for each cluster.

The created model should not only present the transition probabilities between the locations but also take into consideration the time of the day, transition time, etc.

The second module in the processing layer 104, is the record generator 106, which uses the model developed by the learning mechanism for creating pseudo fabricated data records with a desirable rate and volume. This module in fact covers the connection between the records and the subscribers (which are the people "behind" the records). The model predicts the behavior of each cluster. Privacy is preserved with two ways. First the prediction is for the general behavior. There is no way the model predicts exactly a specific behavior on a specific day. Second, the model reflects the behavior of a cluster not a specific device holder.

The pseudo fabricated records are created according to the model 105, which is a probabilistic model and therefore, there is a variance between the subscribers, which belongs to the same cluster. This means that every time that the system uses data from a specific cluster and creates pseudo-fabricated records, it will be different from the pseudo-fabricated records created before, and will not provide the same results (since different people belong to the same cluster, yet they are not the same person and there are still differences between them).

The third layer 107 is the output layer. The output layer consist data set of pseudo fabricated records 108. These records reflect the nature of behavioral, i.e. clusters of behavioral without revealing the device holders identity and therefore, without hurting their privacy.

Although embodiments of the invention have been described by way of illustration, it will be understood that the invention may be carried out with many variations, modifications, and adaptations, without exceeding the scope of the claims.

## Claims

1. A system for predicting activities and movements of subscribers in the near future using true communication records of a telecommunication platform, the true communication records containing all details of active operations that are carried out by users, without affecting user privacy, said system comprising:
a. a module which comprises all the true communication records (102) of the users;
b. an infrastructure data source (103), which translates signaling data associated with the true communication records into geographical means; and
c. an unsupervised learning mechanism (105), which generates a generic pattern for a similar group of subscribers that belong to said pattern, using the translated signaling data;
**characterized in that** said unsupervised learning mechanism is configured to form a plurality of clusters each of which associated with a different generic pattern such that personal details of each subscriber belonging to said different generic pattern are camouflaged, and to develop a probabilistic model for each of said clusters that predicts general cluster behavior that is subject to change, said system further comprising:
d. a record generator (106), which uses the model developed by said learning mechanism for each of said clusters to create pseudo fabricated data records, such that currently created pseudo fabricated data records, using data from a corresponding one of said clusters, provide different results than previously created pseudo fabricated data records due to a variance of subscribers belonging to said one cluster; and
e. an output of a data set of pseudo fabricated records (108) that reflects predicted cluster behavior without revealing an identity of the users.

2. A system according to claim 1, wherein said pseudo-fabricated records (108) are used to predict activities and movements of subscribers in the near future for transition probabilities between given locations.

3. A system according to claim 2, wherein near future refers to hours or days.

4. A method for predicting activities and movements of subscribers in the near future using true communication records of a telecommunication platform, the true communication records containing all details of active operations that are carried out by users, without affecting user privacy, said method comprising the steps of:
a) receiving signaling data associated with the true communication records (102) of a telecommunication platform;
b) translating said signaling data to geographical means using using an infrastructure data source (103); and
c) generating a generic pattern for a similar group of subscribers that belong to said pattern, using said unsupervised learning mechanism and said translated signaling data;
**characterized in that** said method further comprises the steps of:
d) using said unsupervised learning mechanism to form a plurality of clusters each of which associated with a different generic pattern such that personal details of each subscriber belonging to said different generic pattern are camouflaged and to develop a probabilistic model for each of said clusters that predicts general cluster behavior that is subject to change, said method further comprising:
e) creating pseudo fabricated data records based on said generic patterns, such that currently created pseudo fabricated data records, using data from a corresponding one of said clusters, provide different results than previously created pseudo fabricated data records due to a variance of subscribers belonging to said one cluster; and
f) outputting a data set of pseudo fabricated records (108) that reflects predicted cluster behavior without revealing an identity of the users.

5. A method according to claim 4, wherein the step of predicting general cluster behavior comprises the steps of:
a. observing spatiotemporal data for each user being a device holder considering weekday and hour;
b. clustering of the users to obtain a dendrogram;
c. selecting a dendrogram threshold; and
d. learning a stochastic model for each cluster.

6. A method according to claim 4, wherein every time data from a specific cluster is used and a pseudo-fabricated record (108) is created, and is different from other pseudo-fabricated record created from the same cluster.

## Patentansprüche

1. System zum Vorhersagen von Aktivitäten und Bewegungen von Teilnehmern in der nahen Zukunft unter Verwendung echter Kommunikationsdatensätze einer Telekommunikationsplattform, wobei die echten Kommunikationsdatensätze alle Details der von Nutzern ausgeführten aktiven Operationen enthalten, ohne die Privatsphäre der Nutzer zu beeinflussen, wobei das System Folgendes umfasst:
a. ein Modul, das alle echten Kommunikationsdatensätze (102) der Nutzer umfasst;
b. eine Infrastrukturdatenquelle (103), die Signalisierungsdaten, die mit den echten Kommunikationsdatensätzen verbunden sind, in geographische Mittel übersetzt; und
c. einen unbeaufsichtigten Lernmechanismus (105), der unter Verwendung der übersetzten Signalisierungsdaten ein generisches Muster für eine ähnliche Gruppe von Teilnehmern erzeugt, die zu diesem Muster gehören;
**dadurch gekennzeichnet, dass** der unbeaufsichtigte Lernmechanismus ausgebildet ist, um eine Vielzahl von Clustern zu bilden, von denen jedes mit einem unterschiedlichen generischen Muster verbunden ist, so dass persönliche Details jedes Teilnehmers, der zu dem unterschiedlichen generischen Muster gehört, getarnt werden, und um ein probabilistisches Modell für jedes der Cluster zu entwickeln, das ein allgemeines Cluster-Verhalten vorhersagt, das Gegenstand von Änderungen ist, wobei das System ferner Folgendes umfasst:
d. einen Datensatzgenerator (106), der das von dem Lernmechanismus für jeden der Cluster entwickelte Modell verwendet, um pseudo-hergestellte Datensätze zu erzeugen, so dass derzeit erzeugte pseudo-hergestellte Datensätze unter Verwendung von Daten aus einem entsprechenden der Cluster aufgrund einer Varianz von zu dem einen Cluster gehörenden Teilnehmern andere Ergebnisse bereitstellen als zuvor erzeugte pseudo-hergestellte Datensätze; und
e. eine Ausgabe eines Datenpakets aus pseudo-hergestellten Datensätzen (108), das das vorhergesagte Cluster-Verhalten widerspiegelt, ohne die Identität der Nutzer anzugeben.

2. System gemäß Anspruch 1, wobei die pseudo-hergestellten Datensätze (108) verwendet werden, um Aktivitäten und Bewegungen von Teilnehmern in der nahen Zukunft für Übergangswahrscheinlichkeiten zwischen gegebenen Standorten vorherzusagen.

3. System gemäß Anspruch 2, wobei sich die nahe Zukunft auf Stunden oder Tage bezieht.

4. Verfahren zum Vorhersagen von Aktivitäten und Bewegungen von Teilnehmern in der nahen Zukunft unter Verwendung echter Kommunikationsdatensätze einer Telekommunikationsplattform, wobei die echten Kommunikationsdatensätze alle Details der von Nutzern ausgeführten aktiven Operationen enthalten, ohne die Privatsphäre der Nutzer zu beeinflussen, wobei das Verfahren folgende Schritte umfasst:
a) Empfangen von Signalisierungsdaten, die mit den echten Kommunikationsdatensätzen (102) einer Telekommunikationsplattform verbunden sind;
b) Übersetzen der Signalisierungsdaten in geographische Mittel unter Verwendung einer Infrastrukturdatenquelle (103);
und
c) Erzeugen eines generischen Musters für eine ähnliche Gruppe von Teilnehmern, die zu diesem Muster gehören, unter Verwendung des unbeaufsichtigten Lernmechanismus und der übersetzten Signalisierungsdaten;
**dadurch gekennzeichnet, dass** das Verfahren ferner folgende Schritte umfasst:
d) Verwenden des unbeaufsichtigten Lernmechanismus, um eine Vielzahl von Clustern zu bilden, von denen jedes mit einem unterschiedlichen generischen Muster verbunden ist, so dass persönliche Details jedes Teilnehmers, der zu dem unterschiedlichen generischen Muster gehört, getarnt werden, und um ein probabilistisches Modell jedes der Cluster zu entwickeln, das ein allgemeines Cluster-Verhalten vorhersagt, das Gegenstand von Änderungen ist, wobei das Verfahren ferner Folgendes umfasst:
e) Erzeugen von pseudo-hergestellten Datensätzen basierend auf den generischen Mustern, so dass derzeit erzeugte pseudo-hergestellte Datensätze unter Verwendung von Daten aus einem entsprechenden der Cluster aufgrund einer Varianz von zu dem einen Cluster gehörenden Teilnehmern andere Ergebnisse bereitstellen als zuvor erzeugte pseudo-hergestellte Datensätze; und
f) Ausgeben eines Datenpakets aus pseudo-hergestellten Datensätzen (108), das das vorhergesagte Cluster-Verhalten widerspiegelt, ohne die Identität der Nutzer anzugeben.

5. Verfahren gemäß Anspruch 4, wobei der Schritt des Vorhersagens von allgemeinem Cluster-Verhalten folgende Schritte umfasst:
a. Beobachten von raumzeitlichen Daten für jeden Nutzer, der Besitzer eines Gerätes ist, unter Berücksichtigung von Wochentag und Stunde;
b. Clustern der Nutzer, um ein Dendrogramm zu erhalten;
c. Auswählen eines Dendrogramm-Schwellenwertes; und
d. Erlernen eines stochastischen Modells für jeden Cluster.

6. Verfahren gemäß Anspruch 4, wobei jedes Mal, wenn Daten aus einem bestimmten Cluster verwendet werden und ein pseudo-hergestellter Datensatz (108) erzeugt wird, dieser sich von einem anderen pseudo-hergestellten Datensatz unterscheidet, der aus demselben Cluster erzeugt wurde.

## Revendications

1. Système de prédiction d'activités et de mouvements d'abonnés dans un futur proche en utilisant des enregistrements de communication vrais d'une plate-forme de télécommunications, les enregistrements de communication vrais contenant tous les détails d'opérations actives qui sont réalisées par des utilisateurs, sans nuire à la vie privée de l'utilisateur, ledit système comprenant :
a. un module qui comprend tous les enregistrements de communication vrais (102) des utilisateurs ;
b. une source de données d'infrastructure (103) qui traduit des données de signalisation associées aux enregistrements de communication vrais dans des moyens géographiques ; et
c. un mécanisme d'apprentissage non supervisé (105) qui génère un schéma générique pour un groupe similaire d'abonnés qui appartiennent audit schéma, en utilisant les données de signalisation traduites ;
**caractérisé en ce que** ledit mécanisme d'apprentissage non supervisé est configuré pour former une pluralité de groupements, chacune desquelles étant associée à un schéma générique différent, de manière que des détails personnels de chaque abonné appartenant audit schéma générique différent soient camouflés, et pour développer un modèle probabiliste pour chacun desdits groupements qui prédit un comportement de groupement général qui est susceptible de changer, ledit système comprenant en outre :
d. un générateur d'enregistrement (106) qui utilise le modèle développé par ledit mécanisme d'apprentissage pour chacun desdits groupements pour créer des enregistrements de données pseudo-fabriqués, de manière que des enregistrements de données pseudo-fabriqués actuellement créés, en utilisant des données provenant d'un groupement correspondant parmi lesdits groupements, fournissent des résultats différents par rapport à des enregistrements de données pseudo-fabriqués précédemment créés en raison d'une variance d'abonnés appartement audit un groupement ; et
e. une sortie d'un ensemble de données d'enregistrements pseudo-fabriqués (108) qui reflète un comportement de groupement prédit sans révéler une identité des utilisateurs.

2. Système selon la revendication 1, dans lequel lesdits enregistrements pseudo-fabriqués (108) sont utilisés pour prédire des activités et des mouvements d'abonnés dans un futur proche pour des probabilités de transition entre des emplacements donnés.

3. Système selon la revendication 2, dans lequel un futur proche se réfère à des heures ou des jours.

4. Procédé de prédiction d'activités et de mouvements d'abonnés dans un futur proche en utilisant des enregistrements de communication vrais d'une plate-forme de télécommunications, les enregistrements de communication vrais contenant tous les détails d'opérations actives qui sont réalisées par des utilisateurs, sans nuire à la vie privée de l'utilisateur, ledit procédé comprenant les étapes suivantes :
a) la réception de données de signalisation associées aux enregistrements de communication vrais (102) d'une plate-forme de télécommunications ;
b) la traduction desdites données de signalisation à des moyens géographiques en utilisant une source de données d'infrastructure (103) ; et
c) la génération d'un schéma générique pour un groupe similaire d'abonnés qui appartiennent audit schéma, en utilisant ledit mécanisme d'apprentissage non supervisé et lesdites données de signalisation traduites ;
**caractérisé en ce que** ledit procédé comprend en outre les étapes suivantes :
d) l'utilisation dudit mécanisme d'apprentissage non supervisé pour former une pluralité de groupements, chacune desquelles étant associée à un schéma générique différent, de manière que des détails personnels de chaque abonné appartenant audit schéma générique différent soient camouflés, et pour développer un modèle probabiliste pour chacun desdits groupements qui prédit un comportement de groupement général qui est susceptible de changer, ledit procédé comprenant en outre :
e) la création d'enregistrements de données pseudo-fabriqués sur la base desdits schémas génériques, de manière que des enregistrements de données pseudo-fabriqués actuellement créés, en utilisant des données provenant d'un groupement correspondant parmi lesdits groupements, fournissent des résultats différents par rapport à des enregistrements de données pseudo-fabriqués précédemment créés en raison d'une variance d'abonnés appartement audit un groupement ; et
f) la fourniture en sortie d'un ensemble de données d'enregistrements pseudo-fabriqués (108) qui reflète un comportement de groupement prédit sans révéler une identité des utilisateurs.

5. Procédé selon la revendication 4, dans lequel l'étape de prédiction d'un comportement de groupement général comprend les étapes suivantes :
a. l'observation de données spatiotemporelles pour chaque utilisateur qui est un détenteur de dispositif en considérant le jour de la semaine et l'heure ;
b. le regroupement des utilisateurs pour obtenir un dendrogramme ;
c. la sélection d'un seuil de dendrogramme ; et
d. l'apprentissage d'un modèle stochastique pour chaque groupement.

6. Procédé selon la revendication 4, dans lequel toutes les données temporelles provenant d'un groupement spécifique sont utilisées et un enregistrement pseudo-fabriqué (108) est créé, et sont différentes par rapport à un autre enregistrement pseudo-fabriqué créé à partir du même groupement.
